# EUROPÄISCHE PATENTSCHRIFT

(11) **EP 2 952 085 B1**
(45) Veröffentlichungstag und Bekanntmachung des Hinweises auf die Patenterteilung: **01.11.2017**
(21) Anmeldenummer: 15159126.0
(22) Anmeldetag: 16.03.2015
(51) Int. Cl.: A01D 41/12, A01D 69/00

(54) **MÄHDRESCHER**
COMBINE HARVESTER
MOISSONNEUSE-BATTEUSE

(30) Priorität: 06.06.2014 DE 102014108025
(43) Veröffentlichungstag der Anmeldung: 09.12.2015
(73) Patentinhaber: CLAAS Selbstfahrende Erntemaschinen GmbH, 33428 Harsewinkel (DE)
(72) Erfinder: Furmaniak, Jan, 48145 Münster (DE); Claes, Ulrich, 33790 Halle/Westf. (DE); Röwekamp, Thomas, 49134 Wallenhorst (DE); Terörde, Stefan, 48231 Warendorf (DE)

(56) Entgegenhaltungen:
- EP-A1- 2 123 510
- EP-A2- 2 604 105
- CA-A1- 2 794 487
- GB-A- 1 413 294
- US-A1- 2006 104 770

## Beschreibung

Die vorliegende Erfindung betrifft einen Mähdrescher, mit einem Erntegutspeicherbehältnis zur Zwischenspeicherung von Erntegut, welches von dem Mähdrescher durch ein Vorsatzgerät aufgenommen und durch Dresch- und Abscheideaggregate des Mähdreschers bearbeitet wurde. Am Boden des Erntegutspeicherbehältnisses ist zumindest eine Querförderschnecke angeordnet, die der Entleerung des Erntegutspeicherbehältnisses dient. Zur Entleerung des Erntegutspeicherbehältnisses führt die Querförderschnecke das in dem Erntegutspeicherbehältnis befindliche Erntegut einer unter einem Winkel zu der Querförderschnecke geneigt angeordneten Förderschnecke zu. Der Antrieb der Querförderschnecke und der dieser nachgeordneten Förderschnecke erfolgt durch ein Antriebssystem des Mähdreschers, welches ein Verteilergetriebe umfasst, welches durch einen Riementrieb mit einem Vorgelegepunkt trieblich verbunden ist.

Ein derartiger Mähdrescher ist aus der EP 2 604 105 A2 bekannt. Ein von einem Verbrennungsmotor des Mähdreschers angetriebenes Verteilergetriebe steht durch einen Riemen trieblich mit einem Vorgelegepunkt in Verbindung. Dem Vorgelegepunkt ist ein Zahnrad zugeordnet, welches mittels eines Kettentriebes mehrere Ritzel antreibt, die dem Antrieb von Querförderschnecken am Boden des Erntegutspeicherbehältnisses sowie einer unter einem Winkel zu den Querförderschnecken geneigt angeordneten Förderschnecke dienen. Der Kettenantrieb ist im Allgemeinen an einer Außenseite des Mähdreschers angeordnet und erstreckt sich in dessen Längsrichtung. Dabei weist der Kettenantrieb eine erhebliche Länge und eine offenliegende Anordnung auf. Lange Ketten sowie mit hoher Geschwindigkeit umlaufende Ketten weisen eine hohe Geräuschemission auf. Zudem führen die hohen Kettengeschwindigkeiten, die für das Erreichen immer höherer Entleergeschwindigkeiten erforderlich sind, zu einem ungünstigen Verschleißverhalten. Durch den Kettentrieb sind die Querförderschnecken und die Förderschnecke trieblich miteinander gekoppelt, so dass diese nur gemeinsam in Betrieb genommen beziehungsweise abgeschaltet werden können.

Die Druckschrift US 2006/0104770 A1 offenbart eine Steuerung für eine in einem Auswurfrohr angeordnete Förderschnecke und eine in einem Korntank angeordnete Querförderschnecke eines Mähdreschers. Ein von einem Brennstoffmotor aus angetriebener Entladeantrieb weist eine Einschaltkupplung auf. Vom Entladeantrieb aus werden die Querförderschnecke und die Förderschnecke mittels Riementrieben angetrieben. Dabei ist der Querförderschnecke eine zusätzliche Kupplung zugeordnet, mit der sie zu- und abschaltbar ist.

Aufgabe der vorliegenden Erfindung ist es daher, einen Mähdrescher der eingangs genannten Art weiterzubilden, um die aus dem Stand der Technik bekannten Nachteile zu vermeiden. Insbesondere die mit dem langen Kettenantrieb einhergehenden Nachteile sollen vermieden werden.

Diese Aufgabe wird erfindungsgemäß durch die Merkmale des Anspruches 1 gelöst.

Vorteilhafte Weiterbildungen sind Gegenstand der Unteransprüche.

Gemäß dem Anspruch 1 wird vorgeschlagen, dass die mindestens eine Querförderschnecke mittels einer schaltbaren Kupplung unabhängig von der Förderschnecke betreibbar ist. Das von der Förderschnecke unabhängige Antreiben der mindestens einen Querförderschnecke gestattet eine flexiblere Ausführung des Entleerprozesses. So kann die mindestens eine Querförderschnecke mittels der Kupplung antriebslos geschaltet werden, während die Förderschnecke weiter angetrieben wird. Dadurch wird eine zuverlässige und vollständige Entleerung der Förderschnecke am Ende eines Entladeprozesses erreicht.

Vorteilhafterweise ist der Vorgelegepunkt mit einem der mindestens einen Querförderschnecke zugeordneten Getriebe trieblich verbunden und die mindestens eine Querförderschnecke mittels eines endlos umlaufenden Antriebselementes mit dem Getriebe trieblich gekoppelt. Das endlos umlaufende Antriebselement kann als ein Riemen ausgeführt sein. Durch einen Riemen zur Übertragung der Hauptantriebsleistung vom Vorgelegepunkt auf das Getriebe wird eine sichere Leistungsübertragung gewährleistet. Es lassen sich hohe Entleergeschwindigkeiten realisieren, bei zugleich reduzierter Geräuschemission. Zudem weist der Riemen gerade vor dem Hintergrund der hohen Entleergeschwindigkeiten ein günstigeres Verschleißverhalten und damit eine längere Lebensdauer auf als die gemäß dem Stand der Technik zum Einsatz kommende Kette. An dem freien Ende der Förderschnecke schließt sich ein Winkelgetriebe an, mit welchem die Förderschnecke mit einer in einem Auslaufrohr angeordneten Abtankschnecke trieblich verbunden ist.

Bevorzugt kann dem Verteilgetriebe eine Einschaltkupplung zugeordnet sein. Mittels der Einschaltkupplung ist der gesamte Entleerantrieb bei Bedarf zu- oder abschaltbar, so dass keine Leistung vom Verteilergetriebe zum Entleerantrieb übertragen wird.

In vorteilhafter Weiterbildung kann dem Vorgelegepunkt eine Einschaltkupplung zugeordnet sein. Mittels der Einschaltkupplung ist der Entleerantrieb bei Bedarf zuschaltbar. Die Zuordnung der Einschaltkupplung zum Vorgelegepunkt ist konstruktiv einfach zu realisieren.

Dabei kann mittels der Einschaltkupplung eine Abtriebsscheibe des Vorgelegepunktes durch den Riemen mit einer Antriebsscheibe des Getriebes trieblich in Verbindung stehen.

Vorzugsweise kann das Getriebe einen ersten Abtrieb für die Förderschnecke aufweisen. Der erste Abtrieb des Getriebes treibt die Förderschnecke an, die das von der mindestens einen Querförderschnecken der Förderschnecke zugeführte Erntegut aus dem Inneren des Erntegutspeicherbehältnisses durch das Auslaufrohr an einen den Mähdrescher begleitenden Transportwagen abgibt.

Weiterhin kann die Querförderschnecke durch einen Kettentrieb mit einem zweiten Abtrieb des Getriebes verbunden sein, dem eine Kupplung zugeordnet ist. Die Kupplung kann dabei auch der Querförderschnecke zugeordnet sein. Die Kupplung erlaubt das Zu- und Abschalten der mindestens einen Querförderschnecke unabhängig vom Antriebszustand der Förderschnecke. Das heißt, dass die Förderschnecke noch angetrieben ist, während die mindestens eine Querförderschnecke vom Antrieb entkoppelt ist. Auf diese Weise lässt sich auch die Förderschnecke vollständig entleeren. Somit lassen sich Rieselverluste am Ende des Entladeprozesses vermeiden. Zudem mindert das vollständige Entleeren der Förderschnecke am Ende des Entladeprozesses Strukturbelastungen am der Förderschnecke wie auch des Auslaufrohres und dessen Aufhängung.

Insbesondere kann die Kupplung des zweiten Abtriebs als eine Magnetkupplung, eine Klauenkupplung oder eine Lamellenkupplung ausgeführt sein. Als Kupplungen kommen insbesondere pneumatisch, hydraulisch, mechanisch oder elektrisch betätigbare Kupplungen in Frage.

Bevorzugt kann das Getriebe, welches die Antriebsleistung auf die Förderschnecke und die mindestens eine Querförderschnecke überträgt, im Bereich des Korntankbodens angeordnet sein.

Erfindungsgemäß sind mindestens zwei Querförderschnecken am Korntankboden angeordnet, die durch separate Kettentriebe von dem Getriebe angetrieben und mittels jeweils einer Kupplung schaltbar sind. Die Kupplungen sind dabei unabhängig voneinander zu- und abschaltbar. Die Anordnung zumindest zweier Querförderschnecken hat den Vorteil, dass eine höhere Flexibilität während des Entladeprozesses darstellbar ist. Hierbei weist das Getriebe eine der Anzahl der anzutreibenden Querförderschnecken entsprechende Anzahl zweiter Antriebe zum Antrieb der Querförderschnecken auf.

Vorteilhafterweise kann eine Steuereinrichtung vorgesehen sein, die dazu eingerichtet ist, die Einschaltkupplung des Vorgelegepunktes und die Kupplung des jeweiligen zweiten Abtriebs in Abhängigkeit von einem Betriebszustand des Mähdreschers anzusteuern. Unter der Betriebssituation des Mähdreschers ist eine im Ernteprozess auftretende Situation zu verstehen, in der die Notwendigkeit besteht, das Erntegutspeicherbehältnis zu entleeren, wenn dessen Speicherkapazität erschöpft ist und der Entladeprozess durch den Mähdrescher ausgeführt werden soll.

Dabei kann die Steuereinrichtung dazu eingerichtet sein, die Einschaltkupplung des Verteilergetriebes oder des Vorgelegepunktes und die Kupplung des jeweiligen zweiten Abtriebs unabhängig voneinander anzusteuern.

Weiterhin kann die Steuereinrichtung dazu eingerichtet sein, zumindest die Schaltung der Einschaltkupplung zeitlich gesteuert vorzunehmen. Während des Prozesses des Entleerens des Erntegutspeicherbehältnisses kann der Füllstand im Inneren des Erntegutspeicherbehältnisses sensorisch überwacht werden. In dem Moment, in dem die mindestens eine Querförderschnecke der Förderschnecke kein Erntegut mehr zuführt, steuert die Steuereinrichtung die Kupplung des jeweiligen zweiten Abtriebs an, um den Antrieb der jeweiligen Querförderschnecke zu unterbrechen. Die Einschaltschnecke hingegen bleibt über einen definierten Zeitraum eingeschaltet. Die Dauer des Zeitraumes ist derart gewählt, dass eine vollständige Entleerung der Förderschnecke wie auch der Abtankschnecke gewährleistet ist.

Insbesondere kann die Steuereinrichtung dazu eingerichtet sein, die Schaltung der jeweiligen Kupplung des zweiten Abtriebs zeitlich gesteuert vorzunehmen. Hierdurch lässt sich eine sequentielle Inbetriebnahme am Beginn des Entladeprozesses sowie Außerbetriebnahme am Ende des Entladeprozesses der Förderschnecke und der Querförderschnecken erreichen. So kann zu Beginn des Entladeprozesses zunächst die Einschaltkupplung durch die Steuereinrichtung aktiv geschaltet werden, während die Kupplungen der Querförderschnecken inaktiv geschaltet bleiben. Nach einem vorgegebenen zeitlichen Intervall steuert die Steuereinrichtung zunächst einen Teil der Kupplungen an, so dass nur ein Teil der Querförderschnecken angetrieben ist. Nach dem Ablauf eines zweiten Zeitintervalls werden auch die verbleibenden Kupplungen durch die Steuereinrichtung angesteuert, so dass auch die übrigen Querförderschnecken angetrieben sind. In dem Fall das genau zwei Querförderschnecken durch die Steuereinrichtung angesteuert werden, wird in einem ersten Schritt nur eine Kupplung geschaltet, so dass nur eine Querförderschnecke aktiv ist. Die zweite Kupplung wird zeitlich versetzt geschaltet, um zu einem späteren Zeitpunkt die zweite Querförderschnecke zu aktivieren.

Weiterhin kann die zeitlich gesteuerte Schaltung der jeweiligen Kupplung dazu verwendet werden, dass ein Reduzieren oder Anheben der Entleerleistung während des Entladeprozesses darstellbar ist. Hierzu werden die Querförderschnecken am Beginn des Entladeprozesses nur zum Teil durch das Schalten ihrer jeweiligen Kupplung aktiviert, so dass eine Leistungsreserve für den Entladeprozess verbleibt, die bei Bedarf durch eine entsprechende Ansteuerung der Kupplungen bis dahin inaktiven Querförderschnecken zugeschaltet werden kann. In analoger Weise lässt sich eine Reduzierung der Entleerleistung durch das Abschalten einer oder mehrerer Querförderschnecken erreichen.

Die Verwendung von Einschaltkupplung und separaten Kupplungen für die Querförderschnecken erlaubt ein schnelles Abschalten der für das Entleeren des Erntegutspeicherbehältnisses angetriebenen Komponenten. Eine Bedienperson kann in beispielsweise in einer auftretenden Gefahrensituation durch eine Betätigung eines Schalters oder dergleichen eine Ansteuerung der Einschaltkupplung und der separaten Kupplungen der Querförderschnecken durch die Steuereinrichtung bewirken, so dass die Leistungsübertragung von dem Vorgelegepunkt zu dem Getriebe sowie zu den jeweiligen Querförderschnecken augenblicklich unterbrochen wird.

Die vorliegende Erfindung wird nachstehend anhand eines in den Zeichnungen dargestellten Ausführungsbeispieles näher erläutert.

Es zeigen:
- Fig. 1: eine schematische Seitenansicht eines Mähdreschers;
- Fig. 2: eine Teilansicht eines Antriebssystems einer Fördereinrichtung des Mähdreschers.

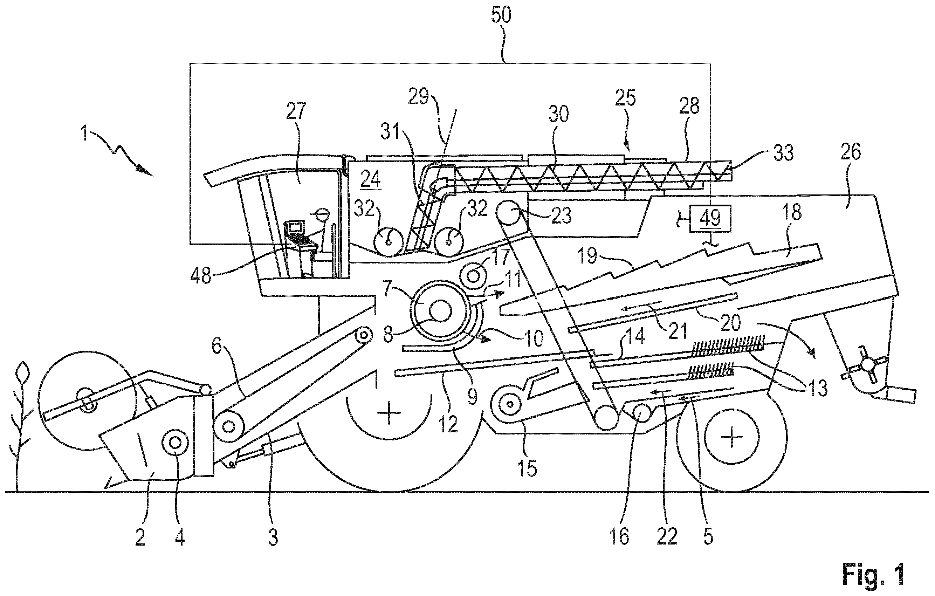

Der in Fig. 1 schematisch dargestellte Mähdrescher 1 besteht aus einem mit dem Fahrwerk verbundenen Traggestell, auf dem ein mehrteiliges Maschinengehäuse 26 befestigt ist. Um den Fahrer des Mähdreschers 1 vor belastenden Umwelteinflüssen zu schützen, ist im frontseitigen Bereich eine geschlossene Fahrerkabine 27 angeordnet. Im Inneren der Fahrerkabine 27 befindet sich eine Bedienvorrichtung 48, die eine Anzeigeeinheit sowie eine Eingabeeinheit, beispielsweise in Gestalt einer Tastatur oder eines Touchscreens umfasst. Des Weiteren weist der Mähdrescher1 zumindest eine Steuereinrichtung 49, mittels der zumindest eines der nachfolgend beschriebenen Arbeitsaggregate des Mähdreschers 1 gesteuert beziehungsweise geregelt werden kann. Die Bedienvorrichtung 48 ist durch eine Steuerleitung 50 mit der Steuereinrichtung 49 für den bidirektionalen Datenaustausch mit dieser verbunden.

Der Mähdrescher 1 nimmt ein Getreideschneidwerk 2 auf, welches in an sich bekannter Weise mit dem Schrägförderer 3 des Mähdreschers 1 verbunden ist. Das Querförderorgan 4 des Schneidwerkes 2 übergibt das Erntegut an den Schrägförderer 3, wobei dieser das Erntegut mittels umlaufendem Förderer 6 in seinem obenseitigen rückwärtigen Bereich an das Dreschwerk 7 des Mähdreschers 1 übergibt. In dem Dreschwerk 7 wird das Erntegut zwischen den Dreschtrommeln 8 und einem diese wenigstens teilweise ummantelnden Dreschkorb 9 hindurchgeführt und in zumindest zwei Teilströme 10, 11 getrennt. Der erste Teilstrom 10 besteht im Wesentlichen aus Körnern, Kurzstroh und Spreu und wird über einen Vorbereitungsboden 12 unmittelbar einer aus verschiedenen Siebebenen 13 bestehenden Reinigungsvorrichtung 14 zugeführt. Die Reinigungsvorrichtung 14 nimmt zudem eine Gebläseeinheit 15 auf, die einen die Siebebenen 13 durchsetzenden Luftstrom generiert.

Der im rückwärtigen Bereich des Dreschwerks 7 aus diesem austretende weitere, im Wesentlichen aus Stroh und einem Restkornanteil bestehende Teilstrom 11 wird mittels einer Strohleittrommel 17 auf eine als Hordenschüttler 18 ausgeführtes Abscheidevorrichtung 19 geleitet. Durch die Bewegung des Hordenschüttlers 18 wird ein großer Anteil der in der Strohschicht enthaltenen Körner 21 auf dem Hordenschüttler 18 abgeschieden und über einen sogenannten Rücklaufboden 20 und den Vorbereitungsboden 12 an die Reinigungseinheit 14 übergeben.

In der Reinigungsvorrichtung 14 wird schließlich aus den in sie eingeleiteten verschiedenen Gutströmen 10, 21 ein gereinigter Körnerstrom 22 mittels Förderelevatoren 23 in eine Erntegutspeicherbehältnis 24 gefördert und dort zwischengespeichert. Die Entleerung der Erntegutspeicherbehältnis 24 erfolgt mittels einer Entleervorrichtung 25.

Der die Reinigungsvorrichtung 14 zusätzlich verlassende und als Überkehrgutstrom 5 bezeichnete Massestrom besteht zum Einen aus Teilen des Erntegutes, die schwerer sind als die Spreu und auch schwerer als die Körner 21,22 selbst, so dass sie nicht von der Gebläseeinheit 15 aus dem Siebkasten geblasen werden können. Das sind unausgedroschene Ähren oder ungenügend entgrannte Körner, die deshalb erneut gedroschen werden müssen. Zum anderen befinden sich aber auch einzelne Körner in dem Überkehrgutstrom 5. Der Überkehrgutstrom 5 wird von einer Überkehrschnecke 16 dem Dreschwerk 7 erneut zugeführt.

Die Entleervorrichtung 25 besteht aus einem Auslaufrohr 28, welches um eine Achse 29 von einer in Fig. 1 dargestellten Transportstellung in eine Arbeitsstellung verschwenkbar ist, wobei die Arbeitsstellung beispielsweise in etwa rechtwinklig zur Zeichnungsebene liegt. In dem Auslaufrohr ist eine mehrteilig ausgebildete Fördereinrichtung 30 angeordnet. Bei der Entleerung des Erntegutspeicherbehältnisses 24 wird das Erntegut mittels zweier in dem Erntegutspeicherbehältnis 24 angeordneten Querschnecken 32 einer unter einem Winkel zu der Querförderschnecke geneigt angeordneten Förderschnecke 31 zugeführt.

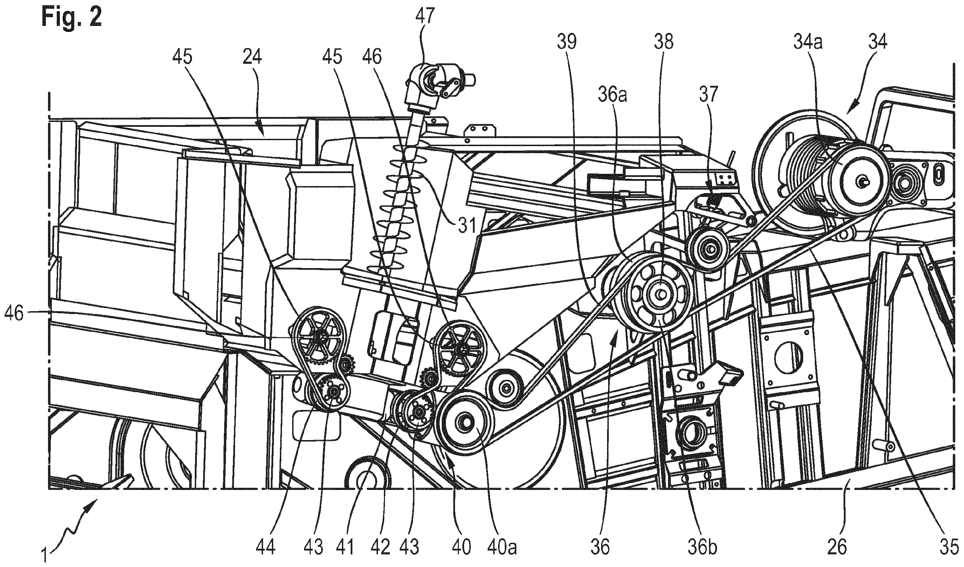

Die Darstellung in Fig. 2 eine Teilansicht eines Antriebssystems des Mähdreschers 1. Das Antriebssystem ist an dem Maschinengehäuse 26 angeordnet. Das Antriebssystem umfasst ein Verteilergetriebe 34, welches von einem als Verbrennungsmotor ausgeführten, nicht dargestellten Antrieb angetrieben ist. Ein Riemen 35 verbindet eine Abtriebsscheibe 34a des Verteilergetriebes 34 mit einer Antriebsscheibe 36a eines Vorgelegepunktes 38. Der Riemen 35 ist durch eine Spannvorrichtung 37 gespannt.

Der Vorgelegepunkt 36 weist eine Einschaltkupplung auf. Denkbar ist auch die Zuordnung der Einschaltkupplung 38 zum Verteilergetriebe 34. Die Einschaltkupplung 38 kann beispielsweise als Trockenscheibenkupplung ausgeführt sein. Mittels der Einschaltkupplung 38 ist eine Abtriebsscheibe 36b des Vorgelegepunktes 36 schaltbar. Ein Riemen 39 verbindet die Abtriebsscheibe 36b des Vorgelegepunktes 36 mit einer Antriebsscheibe 40a eines Getriebes 40. Das Getriebe 40 ist etwa in Höhe des Bodens des Erntegutspeicherbehältnisses 24 angeordnet. Das Getriebe 40 umfasst einen ersten Abtrieb 41, welcher dem Antrieb der Förderschnecke 31 dient. Weiterhin ist zumindest ein zweiter Abtrieb 43 vorgesehen, der dem Antrieb der mindesten einen Querförderschnecke 32 am Boden des Erntegutspeicherbehältnisses 24 dient. Gemäß dem in Fig. 1 und 2 dargestellten Ausführungsbeispiel sind zwei Querförderschnecken 32 vorgesehen, die mittels je eines zweiten Abtriebes 43 angetrieben sind. Der jeweilige zweite Abtrieb 43 ist durch eine separate Kupplung 42 und 44 schaltbar. Die Kupplungen 42 und 44 können dabei als Magnetkupplungen oder als sonstige für diese Zwecke geeignete Kupplung ausgeführt sein. Der jeweilige zweite Abtrieb 43 ist mittels einer Kette 45 mit einem Kettenrad 46 trieblich verbunden. Das jeweilige Kettenrad 46 ist drehfest auf einer Welle der jeweiligen Querförderschnecke 32 angeordnet und treibt diese an.

Die Steuereinrichtung 49 ist dazu eingerichtet, die Entleervorrichtung 25 als ein Arbeitsaggregat des Mähdreschers 1 in Abhängigkeit von einer Betriebssituation des Mähdreschers 1 zu steuern beziehungsweise zu regeln. Eine entsprechende Betriebssituation stellt das Erreichen der maximalen Speicherkapazität des Erntegutspeicherbehältnisses 24 dar. Zur Detektion dieser Betriebssituation kann beispielsweise ein Füllstandsensor dem Erntegutspeicherbehältnis 24 zugeordnet sein .Dieser signalisiert den Füllstand an die Bedienvorrichtung 48 in der Fahrerkabine 27. Der Entleerprozess kann durch die Bedienperson auch manuell initiiert werden. In Reaktion auf das Erreichen der Kapazitätsgrenze des Erntegutspeicherbehältnisses 24 kann eine Bedienperson des Mähdreschers 1 den Entleerprozess durch eine entsprechende Eingabe an der Bedienvorrichtung 48 initiieren. Diese Eingabe wird als Steuersignal durch die Zuleitung 50 an die Steuereinrichtung 49 übertragen.

Die Steuereinrichtung 49 ist weiterhin dazu eingerichtet, das Antriebssystem zeitlich getaktet anzusteuern. Die Ansteuerung des Antriebssystems beziehungsweise seiner Komponenten erfolgt in Abhängigkeit vom Betriebszustand abzuarbeitenden Steueralgorithmus zeitlich getaktet. Während der Abarbeitung einzelner Steuersequenzen eines der Steueralgorithmen wird das Erreichen des angestrebten Resultats nach dem Ablauf einer vorbestimmten Zeitspanne angenommen.

In einem Speicher der Steuereinrichtung 49 sind verschiedene Steueralgorithmen hinterlegt, die unterschiedliche Betriebszustände des Antriebssystems der Entleervorrichtung 25 abbilden.

Einen Betriebszustand stellt der laufende Ernteprozess des Mähdreschers 1 dar, während dessen das Erntegutspeicherbehältnis 24 gefüllt wird, da dessen Kapazitätsgrenze noch nicht erreicht ist. In diesem Betriebszustand ist das Antriebssystem abgeschaltet, das heißt, dass die Einschaltkupplung 38 sowie die Kupplungen 42 und 44 durch eine entsprechende Ansteuerung der Steuereinrichtung 49 deaktiviert sind. Das am Vorgelegepunkt 36 anliegende Drehmoment wird von der Abtriebsscheibe 36b nicht auf die Antriebsscheibe 40a des Getriebes 40 übertragen.

Wird das Erreichen der Kapazitätsgrenze des Erntegutspeicherbehältnisses 24 an der Bedienvorrichtung 48 signalisiert und daraufhin der Entleerprozess initiiert, erfolgt das Einschalten des Antriebsystems. Im Betriebszustand Einschalten steuert die Steuereinrichtung 49 die Einschaltkupplung 38 des Vorgelegepunktes 36 derart an, dass das Drehmoment auf das Getriebe 40 übertragen wird. Die Kupplungen 42 und 44 der zweiten Abtriebe 43, die die Querförderschnecken 32 antreiben, sind weiterhin inaktiv. Das auf das Getriebe 40 übertragene Drehmoment treibt durch den ersten Abtrieb die Förderschnecke 31 sowie die mittels des Winkelgetriebes 47 mit der Förderschnecke 31 verbundene Abtankschnecke 33 im Auslaufrohr 28 an.

Nach Verstreichen einer vorbestimmten Zeitspanne wird in einem nachfolgenden Schritt zunächst eine der beiden Kupplungen 42 oder 44 angesteuert und zeitlich dazu versetzt die andere Kupplung 42 oder 44. Somit laufen die Querschnecken 32 nacheinander an, was die Belastungen des Antriebsystems, insbesondere der Ketten 45 und der Kettenräder 46 reduziert.

Wird der Steuereinrichtung 49 durch die Bedienvorrichtung 48 die Entleerung des Erntegutspeicherbehältnisses 24 signalisiert, was beispielsweise durch Sichtprüfung von der Bedienperson oder durch Detektion mittels des Füllstandsensors initiiert werden kann, entspricht dies dem Betriebszustand Abschalten. Im Betriebszustand Abschalten steuert die Steuereinrichtung 49 die Kupplungen 42 und 44 derart an, dass der Antrieb der Querförderschnecken 32 unterbrochen ist. Der Förderschnecke 31 wird kein weiteres Erntegut mehr zugeführt. Der Antrieb der Förderschnecke 31 bleibt jedoch Aufrechterhalten, so dass eine Entleerung des Abtankrohres 28 durch das Nachlaufen von Förderschnecke 31 und Abtankschnecke 33 erreicht wird.

Zeitlich versetzt wird in einem zweiten Schritt die Einschaltkupplung 38 deaktiviert, so dass von der Abtriebsscheibe 26b des Vorgelegepunkt 36 kein Drehmoment auf die Antriebsscheibe 40a des Getriebes 40 übertragen wird. Auf Grund des zeitlichen Versatzes zwischen der Inaktivierung der Kupplungen 42 und 44 sowie der Einschaltkupplung 38 ist gewährleistet, dass das Auslaufrohr 28 am Ende des Entleerprozesses vollständig entleert ist.

Während des Entleerprozesses kann eine Situation auftreten, während der es erforderlich ist, die Entleergeschwindigkeit zu reduzieren. Dies könnte beispielsweise der Fall sein, wenn der zur Entleerung bereitstehende Transportwagen nicht den gesamten Inhalt des Erntegutspeicherbehältnisses 24 aufnehmen kann, ein weiterer Transportwagen jedoch nicht innerhalb der Zeitspanne der vollständigen Entleerung beim Betrieb beider Querförderschnecken 32 zur Verfügung steht. Der Betriebszustand der reduzierten Entleergeschwindigkeit wird durch eine Ansteuerung einer der beiden Kupplungen 42 und 44 durch die Steuereinrichtung 49 erreicht, welche zu einer Deaktivierung einer der beiden Kupplungen 42 oder 44 führt. Entsprechend lässt sich die Entleergeschwindigkeit halbieren. Diese Ansteuerung lässt sich von der Bedienperson durch eine entsprechende Eingabe an der Bedienvorrichtung 48 erreichen.

Eine weitere Betriebssituation ist durch die sofortige Abschaltung der Arbeitsaggregate bestimmt, um beispielsweise eine Gefahrensituation abzuwenden. In diesem Betriebszustand werden beide Kupplungen 42 und 44 und die Einschaltkupplung 38 durch eine entsprechende Ansteuerung durch die Steuereinrichtung 49 deaktiviert, so dass der Antrieb der Förderschnecke 31 wie auch der Querförderschnecken 32 sofort gestoppt ist.

**Bezugszeichenliste**

| | | | |
|---|---|---|---|
| **1** | Mähdrescher | **30** | Fördereinrichtung |
| **2** | Getreideschneidwerk | **31** | Förderschnecke |
| **3** | Schrägförderer | **32** | Querförderschnecke |
| **4** | Querförderorgan | **33** | Abtankschnecke |
| **5** | Überkehrgutstrom | **34** | Verteilergetriebe |
| **6** | Förderer | **34a** | Abtriebsscheibe |
| **7** | Dreschwerk | **35** | Riemen |
| **8** | Dreschtrommel | **36** | Vorgelegepunkt |
| **9** | Dreschkorb | **36a** | Antriebsscheibe |
| **10** | Teilstrom | **36b** | Abtriebsscheibe |
| **11** | Teilstrom | **37** | Spannvorrichtung |
| **12** | Vorbereitungsboden | **38** | Einschaltkupplung |
| **13** | Siebebene | **39** | Riemen |
| **14** | Reinigungsvorrichtung | **40** | Getriebe |
| **15** | Gebläseeinheit | **40** | Antriebsscheibe |
| **16** | Überkehrschnecke | **41** | Erster Abtrieb |
| **17** | Strohleittrommel | **42** | Kupplung |
| **18** | Hordenschüttler | **43** | Zweiter Abtrieb |
| **19** | Abscheidevorrichtung | **44** | Kupplung |
| **20** | Rücklaufboden | **45** | Kette |
| **21** | Körner | **46** | Kettenrad |
| **22** | Körnerstrom | **47** | Winkelgetriebe |
| **23** | Kornelevator | **48** | Ein- und Ausgabeeinrichtung |
| **24** | Erntegutspeicherbehältnis | **49** | Steuereinrichtung |
| **25** | Entleervorrichtung | **50** | Steuerleitung |
| **26** | Maschinengehäuse | | |
| **27** | Fahrerkabine | | |
| **28** | Auslaufrohr | | |
| **29** | Achse | | |

## Patentansprüche

1. Mähdrescher (1), mit einem Erntegutspeicherbehältnis (24) zur Zwischenspeicherung von Erntegut (21), zumindest einer am Boden des Erntegutspeicherbehältnis (24) angeordneten Querförderschnecke (32), mittels der zur Entleerung des Erntegutspeicherbehältnisses (24) die Zuführung des in dem Erntegutspeicherbehältnis (24) befindlichen Erntegutes (21) einer unter einem Winkel zu der mindestens eine Querförderschnecke (32) geneigt angeordneten Förderschnecke (31) erfolgt, und einem Antriebssystem, umfassend ein Verteilergetriebe (34), welches durch einen Riementrieb mit einem Vorgelegepunkt (36) trieblich verbunden ist, welcher die mindestens eine Querförderschnecke (32) sowie die Förderschnecke (31) antreibt, wobei die mindestens eine Querförderschnecke (32) mittels einer schaltbaren Kupplung (42, 44) unabhängig von der Förderschnecke (31) betreibbar ist, wobei der Vorgelegepunkt (36) mit einem der mindestens einen Querförderschnecke (32) zugeordneten Getriebe (40) trieblich verbunden ist und wobei die mindestens eine Querförderschnecke (32) mittels eines endlos umlaufenden Antriebselementes (45) mit dem Getriebe (40) trieblich gekoppelt ist,
**dadurch gekennzeichnet, dass**
zwei Querförderschnecken (32) am Korntankboden angeordnet sind, die jeweils durch separate Kettentriebe (45, 46) von dem Getriebe (40) angetrieben und mittels jeweils einer Kupplung (42, 44) unabhängig voneinander schaltbar sind.

2. Mähdrescher (1) nach Anspruch 1, **dadurch gekennzeichnet, dass** dem Verteilergetriebe (34) eine Einschaltkupplung zugeordnet ist.

3. Mähdrescher (1) nach Anspruch 1, **dadurch gekennzeichnet, dass** dem Vorgelegepunkt (36) eine Einschaltkupplung (38) zugeordnet ist.

4. Mähdrescher (1) nach Anspruch 3, **dadurch gekennzeichnet, dass** mittels der Einschaltkupplung (38) eine Abtriebsscheibe (36b) des Vorgelegepunktes (36) durch einen Riemen (39) mit einer Antriebsscheibe (40a) des Getriebes (40) trieblich in Verbindung steht.

5. Mähdrescher (1) nach einem der Ansprüche 1 bis 4, **dadurch gekennzeichnet, dass** das Getriebe (40) einen ersten Abtrieb (41) für die Förderschnecke (31) aufweist.

6. Mähdrescher (1) nach einem der Ansprüche 1 bis 5, **dadurch gekennzeichnet, dass** die mindestens eine Querförderschnecke (32) durch einen Kettentrieb (45, 46) mit einem zweiten Abtrieb (43) des Getriebes (40) verbunden ist, dem die Kupplung (42, 44) zugeordnet ist.

7. Mähdrescher (1) nach Anspruch6, **dadurch gekennzeichnet, dass** die Kupplung (42, 44) des zweiten Abtriebs (43) als eine Magnetkupplung ausgeführt ist.

8. Mähdrescher (1) nach einem der Ansprüche 1 bis 7, **dadurch gekennzeichnet, dass** das Getriebe (40) im Bereich des Korntankbodens angeordnet ist.

9. Mähdrescher (1) nach einem der Ansprüche 3 bis 8, **dadurch gekennzeichnet, dass** eine Steuereinrichtung (49) vorgesehen ist, die dazu eingerichtet ist, die Einschaltkupplung (38) und die Kupplung (42, 44) des jeweiligen zweiten Abtriebs (43) in Abhängigkeit von einer Betriebssituation des Mähdreschers (1) anzusteuern.

10. Mähdrescher (1) nach Anspruch 9, **dadurch gekennzeichnet, dass** die Steuereinrichtung (49) dazu eingerichtet ist, die Einschaltkupplung (38) und die Kupplung (42, 44) des jeweiligen zweiten Abtriebs (43) unabhängig voneinander anzusteuern.

11. Mähdrescher (1) nach einem der Ansprüche 9 oder 10, **dadurch gekennzeichnet, dass** die Steuereinrichtung (49) dazu eingerichtet ist, zumindest die Schaltung der Einschaltkupplung (38) zeitlich gesteuert vorzunehmen.

12. Mähdrescher (1) nach einem der Ansprüche 9 bis 11, **dadurch gekennzeichnet, dass** die Steuereinrichtung (49) dazu eingerichtet ist, die Schaltung der jeweiligen Kupplung (42, 44) des zweiten Abtriebs (43) zeitlich gesteuert vorzunehmen.

13. Mähdrescher (1) nach einem der Ansprüche 9 bis 12, **dadurch gekennzeichnet, dass** die Steuereinrichtung (49) dazu eingerichtet ist, nach einem Verstreichen einer vorbestimmten Zeitspanne in einem nachfolgenden Schritt zunächst eine der beiden Kupplungen (42, 44) anzusteuern und zeitlich dazu versetzt die andere Kupplung (42, 44).

## Claims

1. A combine harvester (1) comprising a crop material storage container (24) for intermediate storage of crop material (21), at least one transverse conveyor auger (32) which is arranged at the bottom of the crop material storage container (24) and by means of which for emptying the crop material storage container (24) the crop material (21) in the crop material storage container (24) is fed to a conveyor auger (31) arranged inclined at an angle relative to the at least one transverse conveyor auger (32), and a drive system including a distribution transmission (34) drivingly connected by a belt drive to a transmission point (36) which drives the at least one transverse conveyor auger (32) and the conveyor auger (31), wherein the at least one transverse conveyor auger (32) is drivable by means of a switchable clutch (42, 44) independently of the conveyor auger (31), wherein the transmission point (36) is drivingly connected to a transmissions (40) associated with the at least one transverse conveyor auger (32) and wherein the at least one transverse conveyor auger (32) is drivingly coupled to the transmission (40) by means of an endlessly circulating drive element (45),
**characterised in that**
two transverse conveyor augers (32) are arranged at the grain tank bottom, which are respectively driven by separate chain drives (45, 46) by the transmission (40) and are switchable independently of each other by means of a respective clutch (42, 44).

2. A combine harvester (1) according to claim 1 **characterised in that** a cut-in clutch is associated with the distribution transmission (34).

3. A combine harvester (1) according to claim 1 **characterised in that** a cut-in clutch is associated with the transmission point (36).

4. A combine harvester (1) according to claim 3 **characterised in that** a drive output pulley (36b) of the transmission point (36) is drivingly connected by a belt (39) to a drive pulley (40a) of the transmission (40) by means of the cut-in clutch (38).

5. A combine harvester (1) according to one of claims 1 to 4 **characterised in that** the transmission (40) has a first drive output (41) for the conveyor auger (31).

6. A combine harvester (1) according to one of claims 1 to 5 **characterised in that** the at least one transverse conveyor auger (32) is connected by a chain drive (45, 46) to a second drive output (43) of the transmission (40), with which the clutch (42, 44) is associated.

7. A combine harvester (1) according to claim 6 **characterised in that** the clutch (42, 44) of the second drive output (43) is in the form of a magnetic clutch.

8. A combine harvester (1) according to one of claims 1 to 7 **characterised in that** the transmission (40) is arranged in the region of the grain tank bottom.

9. A combine harvester (1) according to one of claims 3 to 8 **characterised in that** there is provided a control device (49) adapted to actuate the cut-in clutch (38) and the clutch (42, 44) of the respective second drive output (43) in dependence on an operating situation of the combine harvester (1).

10. A combine harvester (1) according to claim 9 **characterised in that** the control device (49) is adapted to actuate the cut-in clutch (38) and the clutch (42, 44) of the respective second drive output (43) independently of each other.

11. A combine harvester (1) according to one of claims 9 and 10 **characterised in that** the control device (49) is adapted to implement at least switching of the cut-in clutch (38) in time-controlled relationship.

12. A combine harvester (1) according to one of claims 9 to 11 **characterised in that** the control device (49) is adapted to implement switching of the respective clutch (42, 44) of the second drive output (43) in time-controlled relationship.

13. A combine harvester (1) according to one of claims 9 to 12 **characterised in that** the control device (49) is adapted after elapse of a predetermined period of time in a following step to firstly actuate one of the two clutches (42, 44) and in time-displaced relationship therewith the other clutch (42, 44).

## Revendications

1. Moissonneuse-batteuse (1) comprenant un contenant de stockage de produit récolté (24) pour le stockage intermédiaire de produit récolté (21), au moins une vis transversale de convoyage (32) qui est disposée au fond du contenant de stockage de produit récolté (24) et au moyen de laquelle s'effectue, pour vider le contenant de stockage de produit récolté (24), l'amenée du produit récolté (21), disposé dans le contenant de stockage de produit récolté (24), à une vis de convoyage (31) disposée de manière inclinée selon un angle par rapport à la au moins une vis transversale de convoyage (32), et un système d'entraînement englobant un boîtier de transfert (34) qui, par l'intermédiaire d'un entraînement à courroie, est relié de manière motrice à un point de renvoi (36) qui entraîne la au moins une vis transversale de convoyage (32) ainsi que la vis de convoyage (31), la au moins une vis transversale de convoyage (32) pouvant être entraînée au moyen d'un accouplement embrayable (42, 44) indépendamment de la vis de convoyage (31), le point de renvoi (36) étant relié de manière motrice à une transmission (40) associée à la au moins une vis transversale de convoyage (32), et la au moins une vis transversale de convoyage (32) étant couplée de manière motrice à la transmission (40) au moyen d'un élément d'entraînement (45) à défilement continu, **caractérisée en ce que** deux vis transversales de convoyage (32) sont disposées au fond de la trémie à grain, lesquelles sont chacune entraînées par la transmission (40) par l'intermédiaire d'entraînements à chaîne séparés (45, 46) et peuvent être embrayées indépendamment l'une de l'autre au moyen chacune d'un accouplement (42, 44).

2. Moissonneuse-batteuse (1) selon la revendication 1, **caractérisée en ce qu'**au boîtier de transfert (34) est associé un accouplement à entraînement progressif.

3. Moissonneuse-batteuse (1) selon la revendication 1, **caractérisée en ce qu'**au point de renvoi (36) est associé un accouplement à entraînement progressif (38).

4. Moissonneuse-batteuse (1) selon la revendication 3, **caractérisée en ce que**, au moyen de l'accouplement à entraînement progressif (38), une poulie menée (36b) du point de renvoi (36) est en liaison motrice avec une poulie menante (40a) de la transmission (40) par l'intermédiaire d'une courroie (39).

5. Moissonneuse-batteuse (1) selon une des revendications 1 à 4, **caractérisée en ce que** la transmission (40) comporte un premier moyen mené (41) pour la vis de convoyage (31).

6. Moissonneuse-batteuse (1) selon une des revendications 1 à 5, **caractérisée en ce que** la au moins une vis transversale de convoyage (32) est reliée par l'intermédiaire d'un entraînement à chaîne (45, 46) à un second moyen mené (43) de la transmission (40) auquel l'accouplement (42, 44) est associé.

7. Moissonneuse-batteuse (1) selon la revendication 6, **caractérisée en ce que** l'accouplement (42, 44) du second moyen mené (43) est conformé en accouplement magnétique.

8. Moissonneuse-batteuse (1) selon une des revendications 1 à è, **caractérisée en ce que** la transmission (40) est disposée dans la zone du fond de la trémie à grain.

9. Moissonneuse-batteuse (1) selon une des revendications 3 à 8, **caractérisée en ce qu'**il est prévu un équipement de commande (49) qui est agencé pour commander l'accouplement à entraînement progressif (38) et l'accouplement (42, 44) du second moyen mené correspondant (43) en fonction d'une situation de marche de la moissonneuse-batteuse (1).

10. Moissonneuse-batteuse (1) selon la revendication 9, **caractérisée en ce que** l'équipement de commande (49) est agencé pour commander l'accouplement à entraînement progressif (38) et l'accouplement (42, 44) du second moyen mené correspondant (43) indépendamment l'un de l'autre.

11. Moissonneuse-batteuse (1) selon une des revendications 9 ou 10, **caractérisée en ce que** l'équipement de commande (49) est agencé pour réaliser au moins l'embrayage de l'accouplement à entraînement progressif (38) de manière temporisée.

12. Moissonneuse-batteuse (1) selon une des revendications 9 à 11, **caractérisée en ce que** l'équipement de commande (49) est agencé pour réaliser l'embrayage de l'accouplement (42, 44) du second moyen mené correspondant (43) de manière temporisée.

13. Moissonneuse-batteuse (1) selon une des revendications 9 à 12, **caractérisée en ce que** l'équipement de commande (49) est agencé pour, après écoulement d'un intervalle de temps prédéterminé, commander lors d'une étape ultérieure d'abord l'un des deux accouplements (42, 44) et, avec un décalage temporel par rapport à celui-ci, l'autre accouplement (42, 44).
